(19) Europäisches Patentamt
European Patent Office
Office européen des brevets

(11) **EP 3 945 422 A1**

(12) **EUROPÄISCHE PATENTANMELDUNG**

(43) Veröffentlichungstag:
**02.02.2022 Patentblatt 2022/05**

(21) Anmeldenummer: **21181016.3**

(22) Anmeldetag: **22.06.2021**

(51) Internationale Patentklassifikation (IPC):
**G06F 11/14** (2006.01) **G06F 11/30** (2006.01)
**G06F 11/07** (2006.01)

(52) Gemeinsame Patentklassifikation (CPC):
**G06F 11/3055; G06F 11/1438; G06F 11/3006;
G06F 11/302;** G06F 11/0751; G06F 11/079;
G06F 2201/865

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **28.07.2020 DE 102020209512**

(71) Anmelder: **Volkswagen Aktiengesellschaft
38440 Wolfsburg (DE)**

(72) Erfinder:
• **Sahlbach, Andreas
  12167 Berlin (DE)**
• **Bakiu, Bujar
  10315 Berlin (DE)**
• **Jaeck, Constantin-Marius
  10319 Berlin (DE)**

(54) **VERFAHREN UND VORRICHTUNG ZUM BESTIMMEN EINES BETRIEBSZUSTANDS MINDESTENS EINER ANWENDUNG**

(57) Die Erfindung betrifft ein Verfahren zum Bestimmen eines Betriebszustands (20) mindestens einer Anwendung (10,10-x), wobei eine Anwendung (10,10-x) mindestens ein Feature (11,11-x) aufweist, wobei ein Feature (11,11-x) auf mindestens einem anderen Feature (11,11-x) derselben Anwendung (10,10-x) und/oder auf mindestens einem Feature (11,11-x) mindestens einer anderen Anwendung (10,10-x) und/oder auf mindestens einer Node (12,12-x) basiert, wobei eine Node (12,12-x) einen in Bezug auf einen Betriebszustand messbaren Bestandteil einer Anwendung (10,10-x) beschreibt, wobei für die mindestens eine Anwendung (10,10-x) ein aktueller Betriebszustand (20) bestimmt wird, wobei hierzu jeweils ein aktueller Betriebszustand (24) von Features (11,11-x) und/oder Nodes (12,12-x) der mindestens einen Anwendung (10,10-x) und von Features (11,11-x) und/oder Nodes (12,12-x) von Features (11,11-x), von denen die mindestens eine Anwendung (10,10-x) abhängig ist und die zu anderen Anwendungen (10,10-x) gehören, bestimmt und/oder abgefragt wird, und wobei der aktuelle Betriebszustand (20) der mindestens einen Anwendung (10,10-x) basierend auf den bestimmten und/oder abgefragten aktuellen Betriebszuständen (24) bestimmt wird, und wobei zumindest der bestimmte aktuelle Betriebszustand (20) der mindestens einen Anwendung (10,10-x) ausgegeben wird.

Fig. 2

EP 3 945 422 A1

**Beschreibung**

Die Erfindung betrifft ein Verfahren und eine Vorrichtung zum Bestimmen eines Betriebszustands mindestens einer Anwendung.

Moderne Anwendungen werden mehr und mehr als verteilte Anwendungen bzw. verteilte Systeme konzipiert und bereitgestellt. Hierbei basieren Anwendungen teilweise oder vollständig auf anderen Anwendungen oder Teilen hiervon, das heißt diese Anwendungen nehmen Dienste, die von den anderen Anwendungen bereitgestellt werden, in Anspruch und benötigen diese Dienste, um selbst Dienste bereitstellen zu können. Hierdurch entsteht ein Netz aus gegenseitigen Abhängigkeiten. Tritt bei diesen Abhängigkeiten ein Fehler an irgendeiner Stelle auf, so kann dies Folgen haben für Anwendungen, die von dem fehlerhaften Teil abhängig sind.

Aus der EP 2 411 927 B1 ist ein Verfahren zum Überwachen von verteilten Anwendungen bekannt.

Der Erfindung liegt die Aufgabe zu Grunde, ein Verfahren und eine Vorrichtung zum Bestimmen eines Betriebszustands mindestens einer Anwendung zu verbessern.

Die Aufgabe wird erfindungsgemäß durch ein Verfahren mit den Merkmalen des Patentanspruchs 1 und eine Vorrichtung mit den Merkmalen des Patentanspruchs 10 gelöst. Vorteilhafte Ausgestaltungen der Erfindung ergeben sich aus den Unteransprüchen.

Insbesondere wird ein Verfahren zum Bestimmen eines Betriebszustands mindestens einer Anwendung zur Verfügung gestellt, wobei eine Anwendung mindestens ein Feature aufweist, wobei ein Feature auf mindestens einem anderen Feature derselben Anwendung und/oder auf mindestens einem Feature mindestens einer anderen Anwendung und/oder auf mindestens einer Node basiert, wobei eine Node einen in Bezug auf einen Betriebszustand messbaren Bestandteil einer Anwendung beschreibt; wobei für die mindestens eine Anwendung ein aktueller Betriebszustand bestimmt wird und hierzu jeweils ein aktueller Betriebszustand von Features und/oder Nodes der mindestens einen Anwendung und von Features und/oder Nodes von Features, von denen die mindestens eine Anwendung abhängig ist und die zu anderen Anwendungen gehören, bestimmt und/oder abgefragt wird, und wobei der aktuelle Betriebszustand der mindestens einen Anwendung basierend auf den bestimmten und/oder abgefragten aktuellen Betriebszuständen bestimmt wird, und wobei zumindest der bestimmte aktuelle Betriebszustand der mindestens einen Anwendung ausgegeben wird.

Ferner wird insbesondere eine Vorrichtung zum Bestimmen eines Betriebszustands mindestens einer Anwendung geschaffen, wobei eine Anwendung mindestens ein Feature aufweist, wobei ein Feature auf mindestens einem anderen Feature derselben Anwendung und/oder auf mindestens einem Feature mindestens einer anderen Anwendung und/oder auf mindestens einer Node basiert, wobei eine Node einen in Bezug auf einen Betriebszustand messbaren Bestandteil einer Anwendung beschreibt; umfassend mindestens eine Datenverarbeitungseinrichtung, wobei die mindestens eine Datenverarbeitungseinrichtung dazu eingerichtet ist, für die mindestens eine Anwendung einen aktuellen Betriebszustand zu bestimmen, und hierzu jeweils einen aktuellen Betriebszustand von Features und/oder Nodes der mindestens einen Anwendung und von Features und/oder Nodes von Features, von denen die mindestens eine Anwendung abhängig ist und die zu anderen Anwendungen gehören, zu bestimmen und/oder abzufragen, und den aktuellen Betriebszustand der mindestens einen Anwendung basierend auf den bestimmten und/oder abgefragten aktuellen Betriebszuständen zu bestimmen, und zumindest den bestimmten aktuellen Betriebszustand der mindestens einen Anwendung auszugeben.

Das Verfahren und die Vorrichtung ermöglichen es, einen aktuellen Betriebszustand für mindestens eine Anwendung, bei verteilten Anwendungen insbesondere für alle Anwendungen, zu bestimmen. Hierbei werden insbesondere die Abhängigkeiten zwischen den Anwendungen, den Features und den Nodes berücksichtigt, sodass ein aktueller Betriebszustand einer betrachteten Anwendung insbesondere durch Betrachtung anderer Features derselben Anwendung, Features von anderen Anwendungen, von denen die betrachtete Anwendung abhängig ist, und von Nodes insbesondere im Wege einer Fehlerfortpflanzung bzw. über eine Wirkungskette der Abhängigkeiten bestimmt werden kann. Zum Bestimmen des aktuellen Betriebszustands für eine betrachtete Anwendung wird jeweils ein aktueller Betriebszustand von Features und/oder Nodes der betrachteten Anwendung und von Features und/oder Nodes von Features, von denen die mindestens eine Anwendung abhängig ist und die zu anderen Anwendungen gehören, bestimmt und/oder abgefragt. Der aktuelle Betriebszustand der betrachteten Anwendung wird dann basierend auf den bestimmten und/oder abgefragten aktuellen Betriebszuständen der Features und/oder Nodes bestimmt. Insbesondere wird der aktuelle Betriebszustand der mindestens einen Anwendung aus den einzelnen aktuellen Betriebszuständen der Features und/oder Nodes bestimmt, beispielsweise über eine logische Verknüpfung. Im einfachsten Fall ist die mindestens eine Anwendung fehlerhaft, wenn mindestens ein Feature und/oder eine Node, von denen die mindestens eine Anwendung direkt oder indirekt abhängig ist, fehlerhaft ist. Zumindest der bestimmte aktuelle Betriebszustand der betrachteten Anwendung wird als Ergebnis ausgegeben. Sofern keine Redundanzen vorgesehen sind, das heißt insbesondere alle Features und/oder Nodes, von denen die betrachtete Anwendung abhängig ist, betriebsbereit sein müssen, damit die betrachtete Anwendung ebenfalls betriebsbereit ist, kann aus einer Fehlerhaftigkeit d.h. einer fehlenden Betriebsbereitschaft bzw. Verfügbarkeit) mindestens eines Features und/oder mindestens einer Node geschlossen werden, dass die betrachtete Anwendung ebenfalls nicht verfügbar bzw. fehlerhaft ist.

Ein Vorteil des Verfahrens und der Vorrichtung ist, dass sich insbesondere eine Wirkungskette der Abhängigkeiten bei Fehlerhaftigkeit einer Anwendung nachvollziehen und darstellen lässt. Hierdurch kann eine Fehlerbehebung verbessert, insbesondere zielgerichtet und beschleunigt durchgeführt werden.

Die Abhängigkeiten bzw. Gruppierungen der Anwendungen, Features und Nodes können beispielsweise beim Entwickeln der Anwendung definiert und/oder vorgegeben werden, sodass diese insbesondere als bekannt vorausgesetzt werden können. Es kann vorgesehen sein, dass als Teil des Verfahrens eine Strukturbeschreibung der Abhängigkeiten der verteilten Anwendungen und derer Bestandteile (Features, Nodes) empfangen und ausgewertet wird.

Die mindestens eine Anwendung ist insbesondere eine von mehreren verteilten Anwendungen, die insbesondere in einem Fahrzeug betrieben werden.

Verteilte Anwendungen sind insbesondere Anwendungen, die von mehreren physischen Komponenten bereitgestellt werden, das heißt auf mehrere physische Komponenten verteilt sind. Insbesondere können verteilte Anwendungen im Wege einer Microservice-Architektur bereitgestellt werden, wobei die Features und die Nodes insbesondere die Microservices ausbilden bzw. bereitstellen.

Eine Anwendung, welche auch als Applikation (engl. Application) bezeichnet werden kann, ist ein Zusammenschluss von einem oder mehreren Features. Eine Anwendung umfasst daher mindestens ein Feature bzw. stellt ein solches bereit.

Ein Feature beschreibt insbesondere eine distinktive bzw. unterscheidbare oder charakteristische Funktionalität einer Anwendung. Eine Funktionalität ist insbesondere ein Dienst, der von der Anwendung bereitgestellt wird. Ein Feature dient insbesondere einer logischen Gruppierung einer Anwendung. Die logische Gruppierung in Features wird beispielsweise während der Entwicklung einer Anwendung vorgenommen bzw. definiert. Ein Feature ist insbesondere abhängig von mindestens einer Node.

Eine Node (Knoten) beschreibt insbesondere einen messbaren Bestandteil einer Anwendung. Eine Node ist insbesondere ein kleinster logischer Bestandteil einer Anwendung. Insbesondere ist eine Node ein Programm, das ausgeführt wird. Beispielsweise kann eine Node einen Microservice, ein Simple Objekt Process Protocol (SOAP)-Service oder, im Fall einer monolithischen Anwendung, die gesamte Anwendung sein. Eine Node muss insbesondere feststellen können, ob alle Dienste, von denen die Node abhängig ist, wie zum Beispiel ein Zugriff auf eine Datenbank oder auf ein Dateisystem oder ein von einer anderen Node bereitgestellter Dienst, zur Verfügung stehen. Insbesondere ist eine Verfügbarkeit hierbei messbar oder bestimmbar, das heißt es kann bestimmt werden, ob ein Zugriff auf die Datenbank oder auf das Dateisystem (oder in Bezug auf sonstige Abhängigkeiten) besteht oder nicht. Ein Betriebszustand einer Node ist daher messbar oder bestimmbar und insbesondere entweder "betriebsbereit" (d.h. ein Dienst der Node ist verfügbar) oder "fehlerhaft" (d.h. ein Dienst der Node ist nicht verfügbar).

Ein Betriebszustand kann insbesondere zumindest die Ausprägungen "betriebsbereit" und "fehlerhaft" umfassen. Es können aber noch weitere Ausprägungen vorgesehen sein.

Es ist insbesondere vorgesehen, dass der aktuelle Betriebszustand periodisch bestimmt wird, sodass das Verfahren regelmäßig wiederholt wird. Insbesondere ist ferner vorgesehen, das Verfahren für alle verteilten Anwendungen durchzuführen.

Ein Anwendungsgebiet des Verfahrens und der Vorrichtung bilden verteilte Anwendungen in Fahrzeugen, insbesondere in Kraftfahrzeugen. Hierdurch kann ein aktueller Betriebszustand der verteilten Anwendungen in dem Fahrzeug, insbesondere Kraftfahrzeug, verbessert überwacht werden.

Teile der Vorrichtung, insbesondere die mindestens eine Datenverarbeitungseinrichtung, können einzeln oder zusammengefasst als eine Kombination von Hardware und Software ausgebildet sein, beispielsweise als Programmcode, der auf einem Mikrocontroller oder Mikroprozessor ausgeführt wird.

Zum Bestimmen des aktuellen Betriebszustands kann beispielsweise wie folgt vorgegangen werden. Aufgrund der Abhängigkeiten zwischen den Anwendungen, Features und Nodes ergeben sich die folgenden Funktionen zum Bestimmen des aktuellen Betriebszustandes von Nodes, Features und Anwendungen:

$$S\_N = f(N, F\_gleich, F\_andere),$$

$$S\_F = f(N, F\_gleich, F\_andere),$$

$$S\_A = f(F\_gleich),$$

wobei S den aktuellen Betriebszustand, beispielsweise mit den Werten "betriebsbereit", "fehlerhaft" und insbesondere auch "fehlerhaft wegen Abhängigkeit", bezeichnet und N für Node, F für Feature und A für Anwendung stehen. Die Indices "gleich" und "andere" geben an, ob es ein Feature der gleichen Anwendung oder ein Feature einer anderen Anwendung ist. Nach Berücksichtigung der Abhängigkeiten lässt sich jede der Funktionen darstellen als

$$S\_x = f(N)$$

mit x = N, F oder A.

Auf diese Weise kann für jede Anwendung, jedes Feature und jede Node ein aktueller Betriebszustand über die aktuellen Betriebszustände der zugehörigen Nodes bestimmt werden.

In einer Ausführungsform ist vorgesehen, dass der aktuelle Betriebszustand eine Information darüber umfasst, ob die mindestens eine Anwendung bei Fehlerhaftigkeit aufgrund eines eigenen Features und/oder einer eigenen Node oder aufgrund einer Abhängigkeit fehlerhaft ist. Aufgrund der bekannten Abhängigkeiten der Anwendung von den Features und den Nodes kann direkt bestimmt werden, ob die Anwendung selbst, das heißt ein Feature und/oder eine Node der betrachteten Anwendung selbst oder ein Feature und/oder eine Node einer anderen Anwendung der Verursacher einer Fehlerhaftigkeit der Anwendung ist. Durch Bereitstellen dieser Information kann eine Bereinigung des Fehlers verbessert, insbesondere zielgerichtet und daher in kürzerer Zeit und mit geringeren Kosten, erfolgen.

In einer Ausführungsform ist vorgesehen, dass der aktuelle Betriebszustand bei Fehlerhaftigkeit eine zusätzliche Information darüber umfasst, welches Feature oder welche Features und/oder welche Node oder welche Nodes für die Fehlerhaftigkeit verantwortlich sind. Hierdurch kann die Fehlerbehebung weiter verbessert werden. Insbesondere kann durch eine Kenntnis der zusätzlichen Information beispielsweise eine Bereinigung bzw. Fehlerbehebung sofort und direkt bei den als Verursacher identifizierten Features und/oder Nodes ansetzen. Entsprechend kann bei Verfügbarkeit der mindestens einen Anwendung das nachfolgend beschriebene Anzeigesignal eine zusätzliche Information darüber umfassen, dass alle zugehörigen Features und/oder Nodes verfügbar sind.

In einer Ausführungsform ist vorgesehen, dass basierend auf dem bestimmten aktuellen Betriebszustand der mindestens einen Anwendung ein Anzeigesignal erzeugt oder verändert und auf mindestens einer Anzeigeeinrichtung ausgegeben wird. Hierdurch kann einem Servicemitarbeiter und/oder einem Endnutzer direkt eine Information bereitgestellt werden, die den aktuellen Betriebszustand der mindestens einen Anwendung beinhaltet. Es kann hierbei insbesondere vorgesehen sein, dass das Anzeigesignal auch die zusätzliche Information darüber umfasst, welche andere Anwendung oder welche anderen Anwendungen und/oder welches Feature oder welche Features und/oder welche Node oder welche Nodes für die Fehlerhaftigkeit verantwortlich sind. Hierdurch kann die Fehlerbehebung weiter verbessert werden.

In einer Ausführungsform ist vorgesehen, dass den möglichen Ausprägungen der Betriebszustände jeweils Zahlenwerte zugeordnet werden, wobei der aktuelle Betriebszustand von Anwendungen und/oder Features und/oder Nodes jeweils als Funktion der jeweils zugehörigen Zahlenwerte ausgedrückt und bestimmt wird. Beispielsweise kann vorgesehen sein, die folgenden Zahlenwerte den möglichen Betriebszuständen zuzuordnen:

- Betriebszustand "betriebsbereit":        1
- Betriebszustand "fehlerhaft wegen Abhängigkeit":    2
- Betriebszustand "fehlerhaft"               3

Die Zahlenwerte erlauben zusätzlich eine Priorisierung der Fehlersuche in Bezug auf eine Anwendung im Hinblick auf Features und/oder Nodes der eigenen Anwendung und anderer Anwendungen.

Nachfolgend ist zur Verdeutlichung ein Beispiel skizziert. Hierbei wird davon ausgegangen, dass eine Node derselben Anwendung "fehlerhaft" ist:

Anwendung 1 (A1) hängt von Feature 1 ab.
Feature 1 (F1) ist abhängig von Node 1 (N1) und Node 2 (N2).

Es werden beispielhaft folgende Betriebszustände bestimmt:

S_N1 = 1 ("betriebsbereit")
S_N2 = 3 ("fehlerhaft")

Daraus folgt aufgrund der Abhängigkeiten:

$$S\_F1 = MAX(S\_N1, S\_N2) = 3 \text{ („fehlerhaft")}$$

$$S\_A1 = MAX(S\_F1) = 3 \text{ ("fehlerhaft")}$$

Gibt es Abhängigkeiten zu Features von anderen Anwendungen, so kann durch Bildung des Maximalwertes der jeweils relevanten Betriebszustände insebsondere unterschieden werden, ob eine Anwendung fehlerhaft ist, weil ein eigenes Feature bzw. eine eigene Node fehlerhaft ist (= 3) oder ob die Anwendung aufgrund einer Abhängigkeit fehlerhaft ist (= 2).

In einer Ausführungsform ist vorgesehen, dass aktuelle Betriebszustände in der folgenden Reihenfolge bestimmt werden: Nodes, Features, Anwendungen. Hierdurch kann das Bestimmen der aktuellen Betriebszustände für alle Nodes, Features und Anwendungen effizienter durchgeführt werden. Die Nodes bilden die kleinsten Bestandteile einer Anwendung und beschreiben insbesondere messbare Bestandteile einer Anwendung. Sind die aktuellen Betriebszustände der Nodes bekannt, so können hieraus die aktuellen Betriebszustände der hiervon abhängigen Features und dann der Anwendungen bestimmt werden.

In einer Ausführungsform ist vorgesehen, dass zumindest von den Nodes jeweils mindestens ein vorangegangener Betriebszustand gespeichert wird, wobei überprüft wird, ob ein aktueller Betriebszustand der Nodes sich gegenüber dem jeweils gespeicherten vorangegangenen Betriebszustand verändert hat, wobei ein aktueller Betriebszustand von Features und Anwendungen, die jeweils von den Features abhängig sind, nur bestimmt wird, wenn sich ein aktueller Betriebszustand von mindestens einer Node der Features gegenüber dem zugehörig gespeicherten vorangegangenen Betriebszustand geändert hat. Hierdurch kann ein Aufwand beim Bestimmen des aktuellen Betriebszustand der mindestens einen Anwendung reduziert werden. Insbesondere lässt sich ein Rechenaufwand hierdurch reduzieren. Anders ausgedrückt werden aktuelle Betriebszustände von einem Feature und/oder einer Anwendung nur bestimmt, wenn sich der aktuelle Betriebszustand mindestens einer Node, von der das Feature und/oder indirekt die Anwendung abhängig ist, geändert hat. Anderenfalls wird der vorangegangene Betriebszustand des Features und/oder Anwendung beibehalten, da dieser sich ebenfalls nicht geändert hat.

In einer Ausführungsform ist vorgesehen, dass der bestimmte aktuelle Betriebszustand der mindestens einen Anwendung an mindestens ein zentrales Fehlermanagementsystem übermittelt wird. Hierdurch kann eine Fehlerbehebung zentral verwaltet und/oder koordiniert werden. Insbesondere beim technischen Kundensupport, beispielsweise für Kraftfahrzeuge, kann beispielsweise vorgesehen sein, dass bei Vorliegen eines Fehlers bei einer Anwendung, das heißt insbesondere bei den Betriebszuständen "fehlerhaft" und "fehlerhaft wegen Abhängigkeit", einem Kunden, der sich beim Kundensupport meldet, direkt eine Information zur Fehlerursache mitgeteilt werden kann.

In einer Ausführungsform ist vorgesehen, dass basierend auf dem bestimmten aktuellen Betriebszustand zumindest einer Anwendung und/oder eines Features und/oder einer Node mindestens eine Node und/oder ein Feature und/oder eine Anwendung neu gestartet oder ein weiteres Mal instanziiert wird und/oder eine Konfiguration von verteilten Anwendungen verändert wird. Hierdurch kann der Fehler automatisch behoben und/oder ein weiteres Auftreten des Fehlers verhindert werden.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Nachfolgend wird die Erfindung anhand bevorzugter Ausführungsbeispiele unter Bezugnahme auf die Figuren näher erläutert. Hierbei zeigen:

Fig. 1    eine schematische Darstellung einer Ausführungsform der Vorrichtung zum Bestimmen eines Betriebszustands mindestens einer Anwendung;

Fig. 2    eine schematische Darstellung der Abhängigkeiten zwischen Anwendungen, Features und Nodes zur Verdeutlichung der Erfindung;

Fig. 3    eine schematische Darstellung einer Ausgestaltungsform eines auf einer Anzeigeeinrichtung ausgegebenen Anzeigesignals.

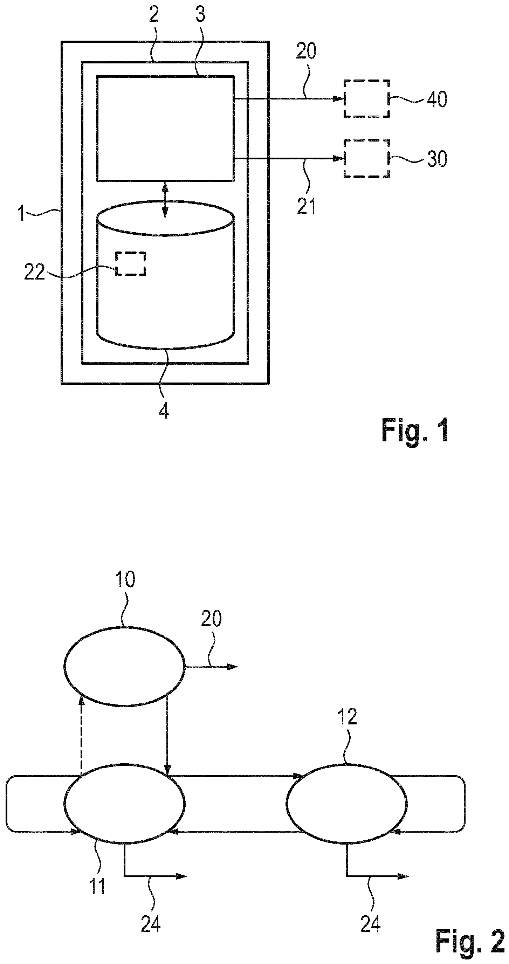

In Fig. 1 ist eine schematische Darstellung einer Ausführungsform der Vorrichtung 1 zum Bestimmen eines Betriebszustands 20 mindestens einer Anwendung gezeigt. Die Vorrichtung 1 umfasst mindestens eine Datenverarbeitungseinrichtung 2. Die mindestens eine Datenverarbeitungseinrichtung 2 umfasst eine Recheneinrichtung 3 und einen Speicher 4. Der Übersichtlichkeit halber ist nur eine Datenverarbeitungseinrichtung 2 dargestellt, prinzipiell können aber auch mehrere vorhanden sein.

Die Datenverarbeitungseinrichtung 2 stellt verteilte Anwendungen bereit. Eine verteilte Anwendung ist ein Zusammenschluss von einem oder mehreren Features. Eine Anwendung umfasst daher mindestens ein Feature bzw. stellt ein solches bereit. Ein Feature beschreibt insbesondere eine distinktive bzw. unterscheidbare oder charakteristische Funktionalität einer Anwendung. Eine Funktionalität ist insbesondere ein Dienst, der von der Anwendung bereitgestellt wird. Ein Feature dient insbesondere einer logischen Gruppierung einer Anwendung. Eine Node beschreibt insbesondere einen messbaren Bestandteil einer Anwendung. Die verteilten Anwendungen stehen insbesondere über gemeinsam genutzte Features und hiervon abhängige Nodes, die jeweils insbesondere Dienste bereitstellen, miteinander in Abhängigkeit.

Die Abhängigkeiten zwischen Anwendungen 10, Features 11 und Nodes 12 sind schematisch in der Fig. 2 dargestellt. Hierbei bezeichnen die durchgezogenen Pfeile jeweils eine Abhängigkeit, wobei der Startpunkt des Pfeiles jeweils abhängig ist von dem Endpunkt des Pfeiles, das heißt der Pfeil ist zu lesen als "ist abhängig von". Lediglich der gestrichelte Pfeil ist zu lesen als "gehört zu".

Eine Anwendung 10 umfasst mindestens ein Feature 11. Ein Feature 11 kann abhängig sein von anderen Features 11 derselben Anwendung 10, aber auch von Features 11 anderer Anwendungen. Ein Feature 11 ist abhängig von mindestens einer Node 12, Nodes 12 können von anderen Nodes 12 abhängig sein und auch von Features 11. Da die Nodes 12 die Grundlage für alle Features 11 und Anwendungen 10 bilden, können aktuelle Betriebszustände der Features 11 und der Anwendungen 10 bestimmt werden, wenn die aktuellen Betriebszustände der Nodes 12 bekannt sind bzw. bestimmt werden.

Die Vorrichtung 1 (Fig. 1) ist insbesondere dazu eingerichtet, das in dieser Offenbarung beschriebene Verfahren zum Bestimmen eines Betriebszustands 20 mindestens einer Anwendung 10 auszuführen.

Die Datenverarbeitungseinrichtung 2 bestimmt für mindestens eine Anwendung 10 einen aktuellen Betriebszustand 20. Hierzu werden von der Datenverarbeitungseinrichtung 2 jeweils aktuelle Betriebszustände 24 von Features 11 und/oder Nodes 12 der mindestens einen Anwendung 10 und von Features 11 und/oder Nodes 12 von Features 11, von denen die mindestens eine Anwendung 10 abhängig ist und die zu anderen Anwendungen 10 gehören, bestimmt und/oder abgefragt. Für jedes zugehörige Feature 11 und/oder jede Node 12 liegt als Ergebnis dann als aktueller Betriebszustand 24 zumindest eine Information darüber vor, ob die Features 11 und/oder die Nodes 12 betriebsbereit oder fehlerhaft sind, das heißt ob diese verfügbar sind oder nicht.

Der aktuelle Betriebszustand 20 der mindestens einen Anwendung 10 wird von der Datenverarbeitungseinrichtung 2 basierend auf den bestimmten und/oder abgefragten aktuellen Betriebszuständen 24 der Features 11 und/oder Nodes 12 bestimmt.

Zumindest der bestimmte aktuelle Betriebszustand 20 der mindestens einen Anwendung 10 wird von der Datenverarbeitungseinrichtung 2 ausgegeben. Der aktuelle Betriebszustand 20 umfasst insbesondere zumindest eine Information darüber, ob die mindestens eine Anwendung 10 verfügbar ist oder nicht ("betriebsbereit" oder "fehlerhaft"), z.B. in Form eines binären Signals (z.B. "0" = "fehlerhaft", "1" = "betriebsbereit").

Es kann vorgesehen sein, dass der aktuelle Betriebszustand 20 eine Information darüber umfasst, ob die mindestens eine Anwendung 10 bei Fehlerhaftigkeit aufgrund eines eigenen Features 11 und/oder einer eigenen Node 12 oder aufgrund einer Abhängigkeit fehlerhaft ist. Die Information kann dann beispielsweise einen dritten Zustand für den Betriebszustand "fehlerhaft wegen Abhängigkeit" beinhalten.

Es kann vorgesehen sein, dass der aktuelle Betriebszustand 20 bei Fehlerhaftigkeit eine zusätzliche Information darüber umfasst, welches Feature 11 oder welche Features 11 und/oder welche Node 12 oder welche Nodes 12 für die Fehlerhaftigkeit verantwortlich sind.

Es kann vorgesehen sein, dass basierend auf dem bestimmten aktuellen Betriebszustand 20 der mindestens einen Anwendung 10 ein Anzeigesignal 21 (Fig. 1) erzeugt oder verändert wird. Das erzeugte oder veränderte Anzeigesignal 21 wird auf mindestens einer Anzeigeeinrichtung 30 ausgegeben.

Es kann vorgesehen sein, dass den möglichen Ausprägungen der Betriebszustände 20 jeweils Zahlenwerte zugeordnet werden oder zugeordnet sind, wobei der aktuelle Betriebszustand 20, 24 von Anwendungen 10 und/oder Features 11 und/oder Nodes 12 jeweils als Funktion der jeweils zugehörigen Zahlenwerte ausgedrückt und bestimmt wird.

Es kann vorgesehen sein, dass aktuelle Betriebszustände 20 in der folgenden Reihenfolge bestimmt werden: Nodes 12, Features 11, Anwendungen 10. Beispielsweise werden regelmäßig zuerst die aktuellen Betriebszustände 24 der Nodes 12 abgefragt. Anschließend werden hieraus die aktuellen Betriebszustände 24 der Features 11 bestimmt und zum Schluss die aktuellen Betriebszustände 20 der Anwendungen 10.

Es kann vorgesehen sein, dass zumindest von den Nodes 12 jeweils mindestens ein vorangegangener Betriebszustand 22 (Fig. 1) gespeichert wird, wobei überprüft wird, ob ein aktueller Betriebszustand 24 der Nodes 12 sich gegenüber dem jeweils gespeicherten vorangegangenen Betriebszustand 22 verändert hat. Ein aktueller Betriebszustand 24 von Features 11 und ein aktueller Betriebszustand 20 von Anwendungen 10, die jeweils von den Features 11 abhängig sind, wird dann nur bestimmt, wenn sich ein aktueller Betriebszustand 24 von mindestens einer Node 12 der Features 11 gegenüber dem zugehörig gespeicherten vorangegangenen Betriebszustand 22 geändert hat.

Es kann vorgesehen sein, dass der bestimmte aktuelle Betriebszustand 20 der mindestens einen Anwendung 10 an mindestens ein zentrales Fehlermanagementsystem 40, beispielsweise eines Fahrzeugs oder eines Dienstleisters (z.B. technischer Kundensupport), übermittelt wird.

Es kann weiter vorgesehen sein, dass basierend auf dem bestimmten aktuellen Betriebszustand 20, 24 zumindest einer Anwendung 10 und/oder eines Features 11 und/oder einer Node 12 mindestens eine Node 12 und/oder ein Feature 11 und/oder eine Anwendung 10 neu gestartet oder ein weiteres Mal instanziiert wird und/oder eine Konfiguration der verteilten Anwendungen 10 verändert wird. Hierdurch kann eine Verfügbarkeit einer überwachten Anwendung 10 wieder hergestellt werden.

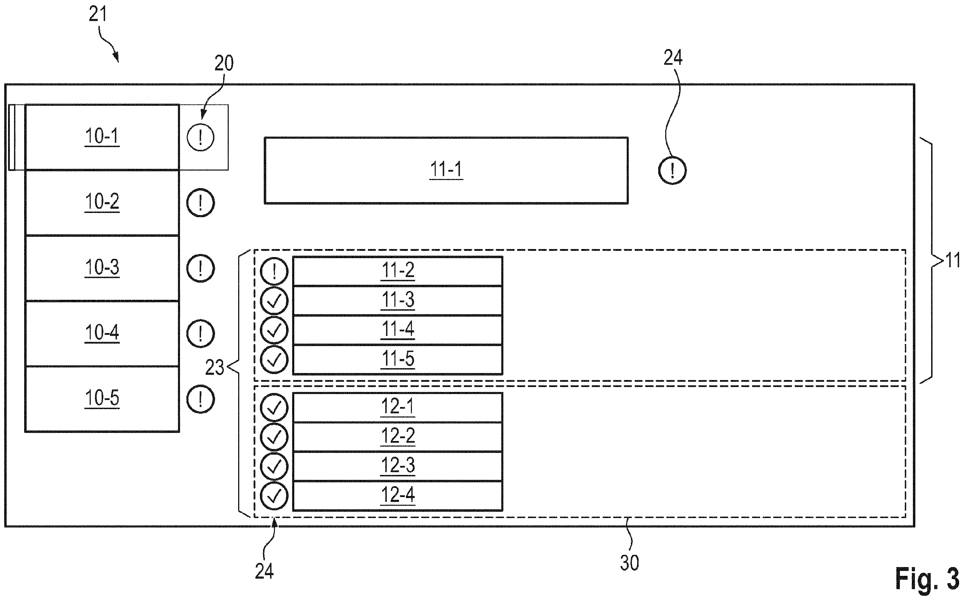

Fig. 3 zeigt eine schematische Darstellung einer Ausgestaltungsform eines auf einer Anzeigeeinrichtung 30 (Fig. 1) ausgegebenen Anzeigesignals 21. Die Anzeigeeinrichtung 30 kann insbesondere eine Anzeigeeinrichtung 30 eines Fahrzeugs sein. Zusätzlich oder alternativ kann die Anzeigeeinrichtung 30 bei einem Dienstleister (z.B. technischer Kundensupport) ausgebildet sein.

Dargestellt auf der linken Seite sind mehrere Anwendungen 10-x (beispielsweise können die Namen der Anwendungen 10-x aufgelistet sein) und rechts neben den Anwendungen 10-x jeweils ein aktueller Betriebszustand 20 der Anwendungen 10-x. Hierbei bezeichnet ein Ausrufezeichen im nicht gefüllten Kreis einen Betriebszustand "fehlerhaft wegen Abhängigkeiten" und ein Ausrufezeichen im ausgefüllten Kreis einen Betriebszustand "fehlerhaft".

Auf der rechten Seite sind die Features 11 der angewählten Anwendung 10-1 dargestellt. Die angewählte Anwendung 10-1 weist hierbei ein eigenes Feature 11-1 und vier Features 11-2, 11-3, 11-4, 11-5 der Anwendung 10-2 auf. Die Anwendung 10-1 weist daher Abhängigkeiten 23 zu den Features 11-2, 11-3, 11-4, 11-5 der Anwendung 10-2 und zu den Nodes 12-x auf.

Ein aktueller Betriebszustand 24 des eigenen Features 11-1 ist rechts neben dem eigenen Feature 11-1 angeordnet. Die aktuellen Betriebszustände 24 der Features 11-2, 11-3, 11-4, 11-5 der Anwendung 10-2 sind links neben den Bezeichnungen der Features 11-2, 11-3, 11-4, 11-5 dargestellt. Ein grüner Haken bedeutet hierbei, dass das Feature "betriebsbereit" ist.

Darunter sind die Nodes 12-x der Anwendung 10-1 dargestellt bzw. bezeichnet, wobei ein jeweiliger aktueller Betriebszustand 24 der Nodes 12-x links neben den Bezeichnungen dargestellt ist.

Aus der Darstellung ist sofort ersichtlich, dass die Anwendung 10-1 nicht betriebsbereit ist aufgrund einer Abhängigkeit zu dem Feature 11-2 der Anwendung 10-2. Dieses Feature 11-2 ist nämlich "fehlerhaft". Diese Information ist wertvoll bei der Fehlerbehebung, da der Verursacher, nämlich das Feature 11-2, direkt identifiziert werden kann und hierdurch eine Ursachensuche und Fehlerbehebung sofort zielgerichtet und beschleunigt durchgeführt werden kann.

Es kann ferner vorgesehen sein, dass ein aktueller Betriebszustand 20, 24 der Anwendungen 10-x und/oder der Features 11-x und/oder der Nodes 12-x im zeitlichen Verlauf als Historie gespeichert wird. Eine solche Historie kann wertvolle Informationen darüber liefern, wie stabil die Betriebszustände 20, 24 der Anwendungen 10-x und/oder der Features 11-x und/oder der Nodes 12-x sind. Bei Identifikation von instabilen Anwendungen 10-x und/oder Features 11-x und/oder Nodes 12-x können dann Maßnahmen ergriffen werden, die eine Stabilität erhöhen.

**Bezugszeichenliste**

| | |
|---|---|
| 1 | Vorrichtung |
| 2 | Datenverarbeitungseinrichtung |
| 3 | Recheneinrichtung |
| 4 | Speicher |
| 10 | Anwendung |
| 10-x | Anwendung |
| 11 | Feature |
| 11-x | Feature |
| 12 | Node |
| 12-x | Node |
| 20 | aktueller Betriebszustand (Anwendung) |
| 21 | Anzeigesignal |
| 22 | vorangegangener Betriebszustand |
| 23 | Abhängigkeiten |
| 24 | aktueller Betriebszustand (Feature oder Node) |
| 30 | Anzeigeeinrichtung |
| 40 | zentrales Fehlermanagementsystem |

**Patentansprüche**

**1.** Verfahren zum Bestimmen eines Betriebszustands (20) mindestens einer Anwendung (10,10-x), wobei eine Anwendung (10,10-x) mindestens ein Feature (11,11-x) aufweist, wobei ein Feature (11,11-x) auf mindestens einem anderen Feature (11,11-x) derselben Anwendung (10,10-x) und/oder auf mindestens einem Feature (11,11-x) mindestens einer anderen Anwendung (10,10-x) und/oder auf mindestens einer Node (12,12-x) basiert, wobei eine Node (12,12-x) einen in Bezug auf einen Betriebszustand messbaren Bestandteil einer Anwendung (10,10-x) beschreibt,

wobei für die mindestens eine Anwendung (10,10-x) ein aktueller Betriebszustand (20) bestimmt wird, wobei hierzu jeweils ein aktueller Betriebszustand (24) von Features (11,11-x) und/oder Nodes (12,12-x) der mindestens einen Anwendung (10,10-x) und von Features (11,11-x) und/oder Nodes (12,12-x) von Features (11,11-x), von denen die mindestens eine Anwendung (10,10-x) abhängig ist und die zu anderen Anwendungen (10,10-x) gehören, bestimmt und/oder abgefragt wird, und wobei der aktuelle Betriebszustand (20) der mindestens einen Anwendung (10,10-x) basierend auf den bestimmten und/oder abgefragten aktuellen Betriebszuständen (24) bestimmt wird, und

wobei zumindest der bestimmte aktuelle Betriebszustand (20) der mindestens einen Anwendung (10,10-x) ausgegeben wird.

2. Verfahren nach Anspruch 1, **dadurch gekennzeichnet, dass** der aktuelle Betriebszustand (20) eine Information darüber umfasst, ob die mindestens eine Anwendung (10,10-x) bei Fehlerhaftigkeit aufgrund eines eigenen Features (11,11-x) und/oder einer eigenen Node (12,12-x) oder aufgrund einer Abhängigkeit nicht verfügbar ist.

3. Verfahren nach einem der vorangegangenen Ansprüche, **dadurch gekennzeichnet, dass** der aktuelle Betriebszustand (20) bei Fehlerhaftigkeit eine zusätzliche Information darüber umfasst, welches Feature (11,11-x) oder welche Features (11,11-x) und/oder welche Node (12,12-x) oder welche Nodes (12,12-x) für die Fehlerhaftigkeit verantwortlich sind.

4. Verfahren nach einem der vorangegangenen Ansprüche, **dadurch gekennzeichnet, dass** basierend auf dem bestimmten aktuellen Betriebszustand (20) der mindestens einen Anwendung (10,10-x) ein Anzeigesignal (21) erzeugt oder verändert und auf mindestens einer Anzeigeeinrichtung (30) ausgegeben wird.

5. Verfahren nach einem der vorangegangenen Ansprüche, **dadurch gekennzeichnet, dass** den möglichen Ausprägungen der Betriebszustände (20,24) jeweils Zahlenwerte zugeordnet werden, wobei der aktuelle Betriebszustand (20,24) von Anwendungen (10,10-x) und/oder Features (11,11-x) und/oder Nodes (12,12-x) jeweils als Funktion der jeweils zugehörigen Zahlenwerte ausgedrückt und bestimmt wird.

6. Verfahren nach einem der vorangegangenen Ansprüche, **dadurch gekennzeichnet, dass** aktuelle Betriebszustände (20,24) in der folgenden Reihenfolge bestimmt werden:

   Nodes (12,12-x), Features (11,11-x), Anwendungen (10,10-x).

7. Verfahren nach einem der vorangegangenen Ansprüche, **dadurch gekennzeichnet, dass** zumindest von den Nodes (12,12-x) jeweils mindestens ein vorangegangener Betriebszustand (22) gespeichert wird, wobei überprüft wird, ob ein aktueller Betriebszustand (24) der Nodes (12,12-x) sich gegenüber dem jeweils gespeicherten vorangegangenen Betriebszustand (22) verändert hat, wobei ein aktueller Betriebszustand (24) von Features (11,11-x) und Anwendungen (10,10-x), die jeweils von den Features (11,11-x) abhängig sind, nur bestimmt wird, wenn sich ein aktueller Betriebszustand (24) von mindestens einer Node (12,12-x) der Features (11,11-x) gegenüber dem zugehörig gespeicherten vorangegangenen Betriebszustand (22) geändert hat.

8. Verfahren nach einem der vorangegangenen Ansprüche, **dadurch gekennzeichnet, dass** der bestimmte aktuelle Betriebszustand (20) der mindestens einen Anwendung (10,10-x) an mindestens ein zentrales Fehlermanagementsystem (40) übermittelt wird.

9. Verfahren nach einem der vorangegangenen Ansprüche, **dadurch gekennzeichnet, dass** basierend auf dem bestimmten aktuellen Betriebszustand (20,24) zumindest einer Anwendung (10,10-x) und/oder eines Features (11,11-x) und/oder einer Node (12,12-x) mindestens eine Node (12,12-x) und/oder ein Feature (11,11-x) und/oder eine Anwendung (12,12-x) neu gestartet oder ein weiteres Mal instanziiert wird und/oder eine Konfiguration von verteilten Anwendungen (10,10-x) verändert wird.

10. Vorrichtung (1) zum Bestimmen eines Betriebszustands (20) mindestens einer Anwendung (10,10-x), wobei eine Anwendung (10,10-x) mindestens ein Feature (11,11-x) aufweist, wobei ein Feature (11,11-x) auf mindestens einem anderen Feature (11,11-x) derselben Anwendung (10,10-x) und/oder auf mindestens einem Feature (11,11-x) mindestens einer anderen Anwendung (10,10-x) und/oder auf mindestens einer Node (12,12-x) basiert, wobei eine Node (12,12-x) einen in Bezug auf einen Betriebszustand messbaren Bestandteil einer Anwendung (10,10-x) beschreibt, umfassend:

mindestens eine Datenverarbeitungseinrichtung (2), wobei die mindestens eine Datenverarbeitungseinrichtung (2) dazu eingerichtet ist, für die mindestens eine Anwendung (10,10-x) einen aktuellen Betriebszustand (20) zu bestimmen, und hierzu jeweils einen aktuellen Betriebszustand (24) von Features (11,11-x) und/oder Nodes (12,12-x) der mindestens einen Anwendung (10,10-x) und von Features (11,11-x) und/oder Nodes (12,12-x) von Features (11,11-x), von denen die mindestens eine Anwendung (10,10-x) abhängig ist und die zu anderen Anwendungen (10,10-x) gehören, zu bestimmen und/oder abzufragen, und den aktuellen Betriebszustand (20) der mindestens einen Anwendung (10,10-x) basierend auf den bestimmten und/oder abgefragten aktuellen Betriebszuständen (24) zu bestimmen, und zumindest den bestimmten aktuellen Betriebszustand (20) der mindestens einen Anwendung (10,10-x) auszugeben.

**Fig. 1**

**Fig. 2**

**Fig. 3**

11-1

11-2
11-3
11-4
11-5

12-1
12-2
12-3
12-4

10-1
10-2
10-3
10-4
10-5

11

20

21

23

24

30

Europäisches Patentamt
European Patent Office
Office européen des brevets

# EUROPÄISCHER RECHERCHENBERICHT

**Nummer der Anmeldung**

EP 21 18 1016

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 10 521 235 B1 (BALASUBRAMANIAN MURALIDHARAN [US] ET AL) 31. Dezember 2019 (2019-12-31) * das ganze Dokument * ----- | 1-10 | INV. G06F11/14 G06F11/30 G06F11/07 |
| A | US 2006/150105 A1 (BRIGHT MATION S [US] ET AL) 6. Juli 2006 (2006-07-06) * Zusammenfassung * * Absatz [0006] – Absatz [0008] * * Absatz [0024] – Absatz [0038] * * Absatz [0045]; Abbildungen 3-4 * ----- | 1-10 | |

**RECHERCHIERTE SACHGEBIETE (IPC)**

G06F

Der vorliegende Recherchenbericht wurde für alle Patentansprüche erstellt

| Recherchenort | Abschlußdatum der Recherche | Prüfer |
|---|---|---|
| München | 6. Dezember 2021 | Salsa, Francesco |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**EP 3 945 422 A1**

**ANHANG ZUM EUROPÄISCHEN RECHERCHENBERICHT
ÜBER DIE EUROPÄISCHE PATENTANMELDUNG NR.**                    **EP 21 18 1016**

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**06-12-2021**

| Im Recherchenbericht angeführtes Patentdokument | Datum der Veröffentlichung | Mitglied(er) der Patentfamilie | Datum der Veröffentlichung |
|---|---|---|---|
| US 10521235 B1 | 31-12-2019 | US 10521235 B1<br>US 2020409715 A1<br>US 2021165659 A1 | 31-12-2019<br>31-12-2020<br>03-06-2021 |
| US 2006150105 A1 | 06-07-2006 | KEINE | |

Für nähere Einzelheiten zu diesem Anhang : siehe Amtsblatt des Europäischen Patentamts, Nr.12/82

EPO FORM P0461

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2411927 B1